# EUROPEAN PATENT APPLICATION

(11) **EP 2 778 207 A2**
(43) Date of publication of application: **17.09.2014**
(21) Application number: 14158690.9
(22) Date of filing: 10.03.2014
(51) Int. Cl.: C09K 5/04

(54) **Stabilized hfo and hcfo compositions for use in high temperature heat transfer applications**

(30) Priority: 15.03.2013 US 201361792115 P; 28.02.2014 US 201414193928
(71) Applicant: Honeywell International Inc., Morristown, NJ 07962-2245 (US)
(72) Inventor: Zyhowski, Gary J., Morristown, NJ New Jersey 07962-2245 (US); Thomas, Raymond H., Morristown, NJ New Jersey 07962-2245 (US); Cohen, Alan P., Morristown, NJ New Jersey 07962-2245 (US)
(74) Representative: Hucker, Charlotte Jane

(57) **Abstract**

The present invention relates, in part, to HFO and/or HCFO based working compositions exhibiting chemical and thermal stability in high temperature heat transfer systems. In certain aspects, the HFO and/or HCFO compounds may be represented by formula I 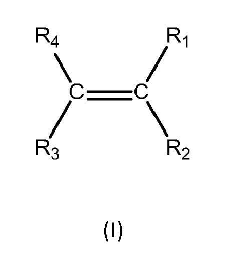 wherein R₁, R₂ R₃, and R₄ are each independently selected from the group consisting of H, F, Cl, Br, C₁-C₆ alkyl, C₁-C₆ fluoroalkyl, at least C₆ aryl (preferably C₆-C₁₅ aryl), C₆-C₁₅ fluoroaryl, at least C₃ cycloalkyl (preferably C₆-C₁₂ cycloalkyl), C₆-C₁₂ fluorocycloalkyl, C₆-C₁₅ alkylaryl, and C₆-C₁₅ fluoroalkylaryl, wherein the compound contains at least one F atom. Such working fluids are provided with at least one stabilizer to minimize HFO and/or HCFO degradation.

## Description

### CROSS-REFERENCE TO RELATED APPLICATIONS

This application claims the benefit of priority under 35 U.S.C. §119(e) of U.S. Provisional Application Serial No. 61/792,115, filed on March 15, 2013, the entire disclosure of which is incorporated herein by reference.

### FIELD OF THE INVENTION

The present invention generally relates to increasing the temperature at which hydrofluoroolefins (HFOs) and hydrochlorofluoroolefins (HCFOs) can operate as working fluids, in certain non-limiting aspects, by employing stabilizing and/or scavenging substrates to manage oxygen availability and chloride and fluoride ion generation.

### BACKGROUND

Hydrofluorocarbons are well-known for their suitability in a number applications including refrigeration, air-conditioning, heat pumping, organic Rankine cycle, and other heat transfer applications including those where heat pipes or thermosiphons are used; hereinafter referred to as "thermal applications." The thermal and chemical stability of HFCs facilitated their use in these applications. Exemplary of this is the use in organic Rankine cycle where it is typically desired to address high source temperatures so that high work output and high thermal efficiency are achieved. HFCs such as 1,1,1,3,3-pentafluropropane and 1,1,1,3,3-pentafluorobutane have been used successfully in this regard.

The stability and relative lack of reactivity of HFCs, however, contributed to what a number of interests currently regard as unacceptably high global warming potential. Since the thermal applications mentioned previously are valuable for their food preservation, comfort and health, energy efficiency, thermal management, and industry, suitable alternatives to HFCs are being explored.

HFOs and HCFOs are lower global warmers, but, by their nature, are not as stable as the higher global warming hydrofluorocarbons (HFCs) that have been used in such applications. The carbon-carbon double bond with HFOs and HCFOs are regarded as giving these compounds greater potential for chemical reaction than HFCs. With HCFOs, in particular, the presence of a carbon-chlorine bond is one structural aspect that can lead to stability that is reduced, as compared to HFCs. It is also a vulnerability that is not found in HFOs. As such, HCFOs may break down to liberate both chloride and fluoride ion under certain use conditions. In general, both the double bond and the lower bond energy of the carbon-chlorine bond as compared to the carbon-fluorine bond make HCFOs more vulnerable to reaction than most HFCs.

Importantly, the onset of breakdown for HFOs and HCFOs will occur at lower temperatures than for HFCs and the rate of breakdown will typically exceed that of HFCs at a given temperature. In elevated temperature applications where HFCs have been used without much risk of breakdown, low global warming HFOs and HCFOs can suffer from impractically short working fluid lifetimes.

A number of alternatives to HFO and/or HCFOs for high temperature applications are flammable fluids such as hydrocarbons, alcohols, and ketones. Often, it is not desired to use a flammable fluid for safety reasons as the consequences of fire or explosion are unacceptable.

Accordingly, there is a need in the art for working fluid compositions that can be used at such high temperatures without creating deleterious breakdown products or otherwise impacting the system and/or the environment.

### SUMMARY OF THE INVENTION

In certain non-limiting aspects, the present invention relates to a stabilized heat transfer composition, such as a high temperature heat transfer composition or an organic rankine cycle working fluid, comprising at least one HFO and/or HCFO compound; and at least one oxygen-removing substrate or stabilizer.

In certain aspects, the least one HFO and/or HCFO compound comprises a compound having the structure of formula (I): 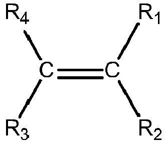 wherein R₁, R₂ R₃, and R₄ are each independently selected from the group consisting of H, F, Cl, Br, and C₁-C₆ alkyl, at least C₆ aryl, in particular C₆-C₁₅ aryl, at least C₃ cycloalkyl, in particular C₆-C₁₂ cycloalkyl, and C₆-C₁₅ alkylaryl. In certain embodiments, such a compound is substituted with at least one F and in other embodiments the compound is substituted with at least one F and at least one Cl.

In certain embodiments, the at least one HFO compound is represented by the formula CₓF_{y}H_{z} wherein y+z = 2x, x is at least 3, y is at least 1, and z is 0 or a positive number. In certain aspects, x is 3 to 12, and y is 1 to 23. In other embodiments, the at least one HCFO compound is represented by the formula CₓF_{y}H_{z}Clₙ wherein y+z+n = 2x, x is at least 3, y is at least 1, z is 0 or a positive number, and n is 1 or 2. In certain aspects, x is 3 to 12, and y is 1 to 23. In even further embodiments, the at least one HFO and/or HCFO compound is selected from the group consisting of HFO-1234ze(E), HFO-1234ze(Z), HCFO-1233zd(E), HCFO-1233zd(Z), HFO-1234yf, and combinations of these.

The at least one oxygen-removing substrate or stabilizer includes any material or compound that is adapted to remove elemental oxygen so as to measurably improve the thermal and chemical stability limits of the HCFOs and/or HFOs herein. In certain aspects, such substrates increase the thermal stability of the HCFO and/or HFO and in further preferred embodiments, such stabilizers make the HCFO and/or HFO stable as a working fluid in high temperature conditions, such as, but not limited to, an organic Rankine cycle.

In certain embodiments, the at least one oxygen-removing substrate comprises an oxygen-removing adsorbent or sorbent that is capable of reacting with elemental oxygen to permanently remove it from the circulating working fluid. In certain embodiments, the oxygen-removing adsorbent or sorbent comprises an oxidizable metal, metal salt, or metal oxide. Such oxidizable metal may be selected from the group consisting of copper, iron, nickel, manganese, molybdenum, cobalt, vanadium, chromium, zinc, and combinations or two or more thereof. In further embodiments, the oxygen-removing adsorbent or sorbent comprises an organic antioxidant. In even further embodiments, the oxygen-removing adsorbent or sorbent comprises a liquid oxygen-removing material selected from the group consisting of alpha-methylstyrene, tocopherol, hydroquinone, isoprene, geraniol, myrcene, or combinations of two or more thereof. Additional embodiments of such stabilizers are provided herein and will be readily apparent to one of skill in the art.

The oxygen-removing substrates may be provided alone, or in certain embodiments with one or more support substrates or media.

Such compositions are surprisingly and unexpectedly demonstrated herein to provide low GWP compositions with chemical and thermal stability for high temperature heat transfer applications. Compositions of the present invention may be used in processes for converting thermal energy to mechanical energy by vaporizing a working fluid and expanding the resulting vapor or vaporizing the working fluid and forming a pressurized vapor of the working fluid. Further embodiments are directed to a binary power cycle and a Rankine cycle system having a secondary loop. Compositions of the present invention are not limited to such applications, however, and may be used in any high temperature heat transfer system, including medium and high temperature heat pump systems.

Additional embodiments and advantages will be readily apparent to the skilled artisan, particularly in view of the additional disclosure provided herein.

To aid in the understanding of the invention, the following non-limiting definitions are provided:

The term "low GWP" refers to fluids that have a GWP of less than 500 relative to carbon dioxide. Preferably, they are fluids that have GWP values of less than 400. More preferably they have a GWP of 200 or less.

The term "fluid" refers to refrigerant, working fluid, heat transfer fluid as would be used in thermal systems and thermal applications.

The term "thermal application" refers to heat transfer application, including, but not limited to, refrigeration, air-conditioning, heat pumping, and sensible and phase-change heat transfer.

The term "thermal system" may include an apparatus in which refrigerating, air-conditioning, heat pumping, organic Rankine cycle, and sensible heat transfer (brine applications) and phase-change heat transfer (particularly, heat pipes and thermosiphons) processes occur.

The term "stabilizer" refers to inhibitors, stabilizers, and/or scavengers. Such stabilizers mitigate chemical and/or thermal degradation of the stabilized compound and/or polymerization of the stabilized compound, particularly at temperatures at or above 50 °C.

The term "effective amount" refers to an amount of stabilizer or scavenger of the present invention which, when added to or contacted with a composition comprising at least one hydrofluoroolefin and/ or hydrochlorofluoroolefin, results in a composition that minimizes or eliminates HFO and/or HCFO degradation to produce undesirable by-products that can corrode thermal systems or their components or otherwise negatively affect performance when used in thermal applications as compared to the composition without stabilizer under similar conditions. The composition comprising at least one hydrofluoroolefin and/or hydrochlorofluoroolefin is thus able to perform with a practical level of utility and lifetime comparable to HFCs such as R-134a, R-245fa, or R-365mfc used in a similar systems in the past.

The term, "high temperature" with respect to operational and/or storage conditions of a low-GWP compound, means at least 50 °C.

### DETAILED DESCRIPTION OF PREFERRED EMBODIMENTS

Certain aspects of the present invention are directed to extending the useful working temperature range and/or fluid lifetime of HFOs and/or HCFOs in high temperature thermal applications such as, but not limited to, organic Rankine cycle, heat pumping, high ambient air-conditioning, and other heat transfer processes that utilize heat pipes/thermosiphons, and sensible heat transfer fluids (brines). Heat transfer fluids often used in applications where a section or sections of a system, such as an evaporator, pre-heater, superheater, or condenser are exposed to high temperatures, can be impacted by the residence time in said component or components. Once at or above the onset temperature for any breakdown reactions, the residence time and temperature together drive breakdown and, it follows, the fluid lifetime. Potential reactions include, among others, oxidation, hydrolysis, and thermal scission.

The particular reactions that occur in a given system will depend on parameters such as time, temperature, and whether or not air, water, metals, or chemically incompatible species, for example, unwanted contaminants that can lead to generation of OH radicals. The particular breakdown products, however, can vary with conditions. Breakdown products may include chloride and fluoride ions and organic acid (including fluorinated species), or other remains of the HFO and HCFO structure in accord with the particular reaction or reactions occurring. One material decomposition mechanism for hydrofluoroolefin and hydrochlorofluorolefin is the reaction of it with oxygen and OH radicals. Reactions stemming from the presence of oxygen can lead to by-product organic acid. With increasing time, breakdown products can be expected to increase in concentration within the thermal system. Corrosion of metals can be caused by reaction of the liberated ions with the metal structure. Although corrosion removes ions from the fluid, the action itself is undesirable. The presence of water can exacerbate corrosion of metals in the system.

In one aspect of the invention, it has now been surprisingly and unexpectedly discovered that system life may be extended by removing at least the oxygen and OH radicals from the system. Provided herein are various embodiments which are not necessarily limiting to the invention, but which assist with the removal of oxygen and OH radicals, particularly from working fluids. Such fluids may be used in high temperature heat transfer applications such as, but not limited to refrigeration, air-conditioning, heat pumping, organic Rankine cycle, sensible heat transfer, and phase-change heat transfer applications such as those employing heat pipes and thermosiphons. To this end, the compositions, methods, and systems of the present invention are directed at maintaining the chemical stability of chemical compounds such as, but not limited to, hydrofluoroolefins (HFOs) and/or hydrochlorofluoroolefins (HCFOs), and in certain embodiments a low GWP hydrofluoroolefin (HFO) and/or hydrochlorofluoroolefin (HCFO).

In certain aspects, the HFOs and HCFOs of the present invention, including low GWP HFOs and HCFOs, may comprise compounds having the structure of formula (I): 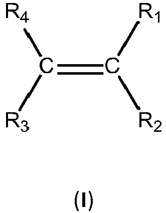 wherein R₁, R₂ R₃, and R₄ are each independently selected from the group consisting of H, F, Cl, Br, C₁-C₆ alkyl, C₁-C₆ fluoroalkyl, at least C₆ aryl (preferably C₆-C₁₅ aryl), C₆-C₁₅ fluoroaryl, at least C₃ cycloalkyl (preferably C₆-C₁₂ cycloalkyl), least C₃ fluorocycloalkyl, C₆-C₁₂ fluorocycloalkyl, C₆-C₁₅ alkylaryl, and C₆-C₁₅ fluoroalkylaryl, optionally substituted with at least one F, Cl, or Br, wherein the compound of formula (I) contains at least one F atom and optionally but preferably in certain embodiments at least one Cl atom.

Suitable alkyl groups include, but are not limited to, methyl, ethyl, and propyl. Suitable aryls include, but are not limited to phenyl. Suitable alkylaryl groups include, but are not limited to methyl-, ethyl-, or propyl-substituted phenyl; benzyl; methyl-, ethyl-, or propyl-substituted benzyl; and phenethyl. Suitable cycloalkyl groups include, but are not limited to, methyl-, ethyl- , or propyl-substituted cyclohexyl. A typical alkyl group can be attached at the ortho, para, or meta position of the aryl ring, and can have a C₁-C₇ alkyl chain. The compounds of formula (I) are preferably linear compounds although branched compounds are not excluded.

In certain aspects, the compounds contain at least one fluorine atom, and may be represented by the formula CₓF_{y}H_{z} wherein y+z = 2x, x is at least 3, y is at least 1, and z is 0 or a positive number. In particular, x is 3 to 12, and y is 1 to 23.

In further aspects, the compounds containing at least one chlorine atom and at least one fluorine atom and may be represented by the formula CₓF_{y}H_{z}Clₙ wherein y+z+n = 2x, x is at least 3, y is at least 1, z is 0 or a positive number, and n is 1 or 2. In particular, x is 3 to 12, and y is 1 to 23.

For example, in certain embodiments, the compounds are from the group C₃F₄H₂ (e.g. 1,3,3,3-tetrafluoropropene (1234ze - both E and Z isomers) or 2,3,3,3-tetrafluorpropene (1234yf)). In further aspects, the compounds may be from the group C₃F₃H₂Cl (e.g. 1-chloro-3,3,3-trifluoropropene (1233zd - both E and Z isomers) and 2-chloro-3,3,3-trifluoropropene (1233xf)). In further embodiments, the compounds may be from the group C₃F₃HCl₂ (e.g. 1,1-dichloro-3,3,3-trifluoropropene (1223za) or 1,2-dichloro-3,3,3-trifluoropropene (1223xd - both E and Z isomers). In certain embodiments, the compound consists essentially of 1233zd(Z). In certain other embodiments, the compound consists essentially of 1233zd(E). In further embodiments, the compound consists essentially of 1234ze(E). In even further alternative embodiments, the compound consists essentially of 1234ze(Z). In even further alternative embodiments, the compound consists essentially of 1234yf.

Such HFOs and HCFOs may be used alone or together in combination with each other. In certain preferred embodiments, the compound includes 1234ze, and in certain aspects 1234ze(E), in a blend with the 1234yf. While the amounts of 1234ze and 1234yf may be in any amount to form a blend that would perform in accordance with the teachings of the present application, in certain non-limiting embodiments 1234yf is provided in an amount from greater than about 0 wt % to about 40 wt. % and 1234ze in an amount from less than 100 wt. % to about 60 wt. %. In further non-limiting embodiments, 1234yf is provided in an amount from greater than about 0 wt % to about 30 wt. %; from about 5 wt % to about 30 wt. %; or from about 10 wt % to about 30 wt. %; and 1234ze in an amount from less than 100 wt. % to about 70 wt. %; from about 95 wt % to about 70 wt. %; or from about 90 wt % to about 70 wt. %.

Specific, but not limiting examples of HFOs and HCFOs that exhibit a low global warming potential (GWP), particularly a GWP of less than 150 and zero or near zero ozone depletion potential (ODP) include, but are not limited to, 1234ze E and Z isomers (CF3CH=CHF), 1234yf (CF3CF=CH2), 1243zf (CF3CH=CH2), 1233zd E and Z isomers (CF3CH=CHCl), 1233xf (CF3CCl=CH2) and isomers of 1223za (CF3CH=Cl2) and 1223xd E and Z isomers (CF3Cl=CHCl).

One or any combination of such compounds may be provided with at least one effective amount of a stabilizer. The stabilizer may be any compound or agent that measurably improves the thermal and chemical stability limits of the HCFOs and/or HFOs herein. In certain aspects, such stabilizers increase the thermal stability of the HCFO and/or HFO and in further preferred embodiments, such stabilizers make the HCFO and/or HFO stable was a working fluid in high temperature conditions, such as in an organic Rankine cycle.

In one exemplary embodiment, the stabilizer includes an oxygen-removing sorbent (including absorbents and sorbents), preferably a solid material, that is capable of reacting with elemental oxygen to permanently remove it from the circulating working fluid. In certain aspects, the stabilizer includes one or a combination of metal, metal salts, or metal oxides, which may be used alone (e.g. as a solid or finely divided powder, for example) or in certain aspects may be provided on a support substrate or media, as discussed below. Such materials include, but are not limited to, oxidizable metals (or salts thereof) such as copper, iron, nickel, manganese, molybdenum, cobalt, vanadium, chromium, zinc, and other metals that can exist as an oxide. These include metals in zero oxidation state or any higher oxidation state that can be further oxidized. Other materials that can react with elemental oxygen include ferrous materials (e.g., ferrous carbonate), sulfite salts, or salts of pyrogallol (1,2,3-trihydroxy benzene).

In another embodiment, the oxygen-removing sorbent is an organic antioxidant powder, pellet or bead. Non-limiting examples of such antioxidants include vitamin C and butylated hydroxytoluene (BHT). In further embodiments, the stabilizer is a liquid oxygen-removing material such as alpha-methylstyrene, phenols such as or tocopherol or hydroquinone, or terpenes such as isoprene, geraniol or myrcene, or mixtures thereof may also be used.

In certain preferred embodiments, the absorbent or sorbent material effectively removes oxygen from the fluid and replaces it with byproducts or materials that are not harmful to the thermal system. For example, if the sorbent is iron, the byproduct is ferric oxide. If ferrous carbonate is used as the sorbent, carbon dioxide may be the byproduct. In similar fashion, other stabilizers, scavengers, and inhibitors such as thiols, thioethers, phosphites, terpenes, terpenoids, organo-phosphates, lactones, oxetanes, alkyl aryl ethers, nitromethane, triazoles and epoxides can be incorporated.

In another embodiment, one or more of the foregoing stabilizers can be used in conjunction with other scavenging media such as silica gel, molecular sieve, desiccant, and the like for the purposes of removing acidity and/or moisture.

The amount of stabilizer provided within the working fluid or to the system, may be any amount to improve the chemical and thermal stability of the HFO and/or HCFO such that it may operate at commercially tolerable levels. To this end, the amount of one or more stabilizers may be any amount such that the HFO and/or HCFO working fluid may be used in a high temperature heat transfer system, particularly though not exclusively an organic Rankine cycle, heat pumping, high ambient air-conditioning, and other heat transfer processes that utilize heat pipes/thermosiphons, and sensible heat transfer fluids (brines). In certain non-limiting aspects, stabilizers, particularly soluble stabilizers, may include from about 0.001 weight percent to about 10 weight percent of the working fluid or of the composition, more preferably from about 0.01 weight percent to about 5 weight percent of the working fluid or of the composition, even more preferably from about 0.3 weight percent to about 4 weight percent of the working fluid or of the composition and even more preferably from about 0.3 weight percent to about 1 weight percent of the working fluid or of the composition, wherein such amounts are based on the total weight of compositions comprising at least one hydrofluoroolefin and/or hydrochlorofluoroolefin as described herein.

While, in certain aspects the stabilizer may be provided in solution with the working fluid, in other embodiments it may be provided with a device, where the stabilizer may remain with the device or may eventually become soluble (or gradually solubilize) into the working fluid. The devices containing the oxygen-removing sorbent can take a variety of forms and may be provided on a variety of support substrates or media, each form of which allows the sorbent to contact the fluid and remove the oxygen upon chemisorption.

Non-limiting examples of suitable support substrates/media include a zeolite, a membrane, or the like. Certain embodiments include methods for using such support substrates that are pre-treated with fluid-soluble stabilizers to achieve effective amounts of stabilizer, such as, but not limited to, from about 0.001 weight percent to about 10 weight percent, more preferably from about 0.01 weight percent to about 5 weight percent, even more preferably from about 0.3 weight percent to about 4 weight percent and even more preferably from about 0.3 weight percent to about 1 weight percent based on the total weight of compositions comprising at least one hydrofluoroolefin and/or hydrochlorofluoroolefin as described herein.

In certain alternative embodiments, a metal, metal salt or metal oxide is mixed with a zeolite, membrane or other support substrate such as alumina. The metal, metal salt, or metal oxide may be provided to the support in an amount from about 1 wt% to about 60 wt%, in certain embodiments from about 5 wt% to about 55 wt%. In certain embodiments, such as when the support is a zeolite, the range may be provided in a range from about 5 wt% to about 30 wt. % and in further embodiments in a range from about 10 wt% to about 20 wt%. In embodiments when the support is alumina, a higher load of metal, metal salt, or metal oxide may be provided. In certain non-limiting embodiments, the metal may be provided in an amount from about 10 to about 60 wt. % and in further embodiments in an amount from about 20 to about 50 wt. %

In other embodiments, the oxygen-removing sorbent is applied as a collar, ring or coating that has been applied on an integral system component of the thermal system. In this manner, the fluid will contact the oxygen-removing sorbent during its routine circulation, whereby oxygen in the circulating fluid will react with the oxygen-removing sorbent and thus be permanently removed from circulating in the thermal system. In another embodiment, the oxygen-removing sorbent is in the form of beads, pellets, or granules, preferably beads, that comprise the sorbent and at least a matrix or substrate material within which the sorbent is dispersed.

In one embodiment, the sorbent is in a bag. The sorbent or bag of sorbent can be placed in the same container that contains a desiccant, such as can be found in a typical refrigeration, air-conditioning, or heat pump system. The bag can be placed in the receiver-dryer vessel in the refrigerant liquid line of the refrigerant system or in the accumulator-dryer vessel in the refrigerant suction line. Alternatively, the oxygen-removing sorbent can be placed in a separate vessel. As the reaction of the sorbent with oxygen proceeds faster at high temperature, an ideal location may be a compressor discharge line, which is at higher temperature than either the liquid line or suction line. The oxygen removing sorbent also can be in the form of beads, pellets, or granules that fill a tube, column, bag or other container that exposes the sorbent and is placed so that the sorbent contacts the fluid.

In another exemplary embodiment, the device comprises an oxygen-removing sorbent contained within a bag, sack, or capsule formed of a material that is permeable to the fluid, oxygen, and OH radicals but is not permeable to the oxygen-removing sorbent itself. For example, the bag or sack may be formed of a thermo-mechanically expanded polytetrafluoroethylene membrane, such as when liquid adsorbers such as alpha-methylstyrene, isoprene, phenols, or mixtures thereof are used. Alternatively, the oxygen-removing sorbent may be in the form of beads, pellets, or other solid forms housed within a bag, sack, or capsule formed of a material that is impermeable to oxygen when dry but that dissolves when exposed to the fluid and/or lubricant oils if present. Further to this end, the sorbent may be in the form of beads, pellets or other solid forms that are encapsulated or coated with a material that remains impermeable to oxygen when dry but dissolves when exposed to the fluid and/or lubricant oils such as mineral oils, alkylbenzenes, (poly) alpha-olefins, polyol esters, polyoxyalkylene glycol ethers, polyvinylethers, and mixtures thereof.

In another embodiment, the oxygen removing sorbent may be in the form of a coating applied to a tube or other system component. The sorbent, in turn, is encapsulated or over-coated with a material that remains impermeable to oxygen until it is exposed to the fluid and/or lubricant oils, at which time it dissolves, exposing the sorbent. The oxygen-removing sorbent is housed within a bag, sack, capsule, or other container constructed of metal foil or an oxygen-impermeable polymer comprising an internal puncturing mechanism, in another exemplary embodiment. The container remains stable before use; however, once the thermal system becomes pressurized, the internal puncturing mechanism punctures the bag on compression, releasing the sorbent.

In another embodiment, the oxygen-removing sorbent, in the form of a metal, is loaded by impregnation upon or co-nodulization with activated alumina, which acts as a substrate. According to known technology, the metal is loaded as a metal oxide or as a metal acetate, carbonate, nitrate or other salt with volatile anion. The alumina with the metal is activated by heating. The anion decomposes in gas and leaves behind the metal oxide. The oxide then is reduced either partially or completely to make it active for oxygen scavenging. The reduction takes place by contact with hydrogen or other reducing gas at elevated temperature to reduce the metal oxide to metal. A method for removing oxygen from a fluid, such as a refrigerant, of a thermal system comprises exposing the fluid to an oxygen-removing sorbent. The oxygen-removing sorbent comprises a material that is insoluble in the refrigerant and/or lubricant oils of the refrigeration system and can react with elemental oxygen to permanently remove it from the circulating refrigerant. The oxygen-removing sorbent can assume any of the above-described forms and be used in any of the above-described devices to perform the method.

While the stabilizer-containing HFO and/or HCFO working fluids may be used in any heat transfer system, it is beneficial to provide them in locations of the system where the ability to absorb and remove oxygen is the highest. While not limited thereto, stabilizers could be placed in an in-line container or series of in-line containers in which liquid or, alternatively, gaseous working fluid can pass during circulation in the heat transfer system. For an organic Rankine cycle system, one such advantageous location would be upstream of the inlet to the organic Rankine cycle evaporator where air is likely to accumulate. Additionally, the stabilizer (or support substrate) can react with any liberated chloride and fluoride ion thus reducing the circulating concentration of these ions otherwise available for corrosion of system metals.

The stabilized working fluids of the invention are useful as energy conversion fluids. Such compounds meet the requirement for not adversely affecting atmospheric chemistry and would be a negligible contributor to ozone depletion and to green-house global warming in comparison to fully and partially halogenated hydrocarbons and are suitable for use as working fluids for use in thermal energy conversion systems.

Thus, in a method for converting thermal energy to mechanical energy, particularly using an organic Rankine cycle system, working fluids of the invention comprise at least one of the stabilized HFO and/or HCFO compounds, as defined herein.

The present invention meets the need in the art for a working fluid which has low ozone depletion potential and is a negligible contributor to green-house global warming compared with fully halogenated CFC and partially halogenated HCFC materials, is effectively nonflammable, and is chemically and thermally stable in conditions where it is likely to be employed. That is, the stabilized materials are not degraded by chemical reagents for example, acids, bases, oxidizing agent and the like or by higher temperature more than ambient (25 °C). These materials have the proper boiling points and thermodynamic characteristics that would be usable in thermal energy conversion to mechanical shaft power and electric power generation; they could take advantage of some of the latent heat contained in low pressure steam that is presently not well utilized.

The above listed materials may be employed to extract additional mechanical energy from low grade thermal energy sources such as industrial waste heat, solar energy, geothermal hot water, low-pressure geothermal steam (primary or secondary arrangements) or distributed power generation equipment utilizing fuel cells or prime movers such as turbines, microturbines, or internal combustion engines. Low-pressure steam can also be accessed in a process known as a binary Rankine cycle. Large quantities of low pressure steam can be found in numerous locations, such as in fossil fuel powered electrical generating power plants. Binary cycle processes using these working fluids would prove especially useful where a ready supply of a naturally occurring low temperature "reservoir," such as a large body of cold water, is available. The particular fluid could be tailored to suit the power plant coolant quality (its temperature), maximizing the efficiency of the binary cycle.

An embodiment of the invention comprises a process for converting thermal energy to mechanical energy in a Rankine cycle (in which the cycle is repeated) comprising the steps of vaporizing a working fluid with a hot heat source, expanding the resulting vapor and then cooling with a cold heat source to condense the vapor, and pumping the condensed working fluid, wherein the working fluid is at least one stabilized HFO/HCFO compound, as defined above. The temperatures depend on the vaporization temperature and condensing temperature of the working fluid.

Another embodiment of the invention comprises a process for converting thermal energy to mechanical energy which comprises heating a working fluid to a temperature sufficient to vaporize the working fluid and form a pressurized vapor of the working fluid and then causing the pressurized vapor of the working fluid to perform mechanical work, wherein the working fluid is at least one stabilized HFO/HCFO compound, as defined above. The temperature depends on the vaporization temperature of the working fluid.

The working fluids may be used in any application known in the art for using an Organic Rankine cycle system. Such uses include geothermal applications, plastics, exhaust from a heat or combustion application, chemical or industrial plants, oil refineries, and the like.

Although source temperatures can vary widely, for example from about 90°C for systems based on geothermal to >800°C, and can be dependent upon a myriad of factors including geography, time of year, etc. for certain combustion gases and some fuel cells, applicants have found that a great and unexpected advantage can be achieved by careful and judicious matching of the working fluid to the source temperature of the system. More specifically, for certain preferred embodiments applicants have found that the stabilized working fluids are highly effective and exhibit chemical and thermal stability at a temperature of about 50 °C and higher, particularly about 100 °C and higher, and more particularly about 200 °C and higher, compared to the same compounds without an effective amount of stabilzer. In further embodiments, such stabilized working fluids are advantageous for use in systems in which the temperature in the boiler (evaporator) is between about 80°C and about 130°C. In certain preferred embodiments, such working fluids are advantageous in system with an evaporator temperature between from about 90°C to about 120°C or from about 90°C to about 110°C. In certain embodiments, the evaporator temperature are less than about 90°C, which is generally and advantageously associated with systems based on relatively low grade source temperatures, even systems which have source temperatures as low as about 80°C. Systems based on sources such as waste water or low pressure steam from, e.g., a plastics manufacturing plants and/or from chemical or other industrial plant, petroleum refinery, and the like, as well as geothermal sources, may have source temperatures that are at or below 100°C, and in some cases as low as 90°C or even as low as 80°C. Under these conditions, such compounds demonstrate a significant reduction in thermal or chemical degradation, particularly with respect to reactions occurring at an olefinic double bond.

Gaseous sources of heat such as exhaust gas from combustion process or from any heat source where subsequent treatments to remove particulates and/or corrosive species result in low temperatures may also have source temperatures that are at or below at or below about 130°C, at or below about 120°C, at or below about 100°C, at or below about 100°C, and in some cases as low as 90°C or even as low as 80°C. For all of such systems in which the source temperature is below about 90°C, it is generally preferred that the working fluid of the present invention in certain embodiments comprises, more preferably comprises in major proportion by weight and even more preferably consists essentially of one or more of the stabilized HFO or HCFO compounds above.

As mentioned above, the mechanical work may be transmitted to an electrical device such as a generator to produce electrical power.

A further embodiment of the invention comprises a binary power cycle comprising a primary power cycle and a secondary power cycle, wherein a primary working fluid comprising high temperature water vapor or an organic working fluid vapor is used in the primary power cycle, and a secondary working fluid is used in the secondary power cycle to convert thermal energy to mechanical energy, wherein the secondary power cycle comprises: heating the secondary working fluid to form a pressurized vapor and causing the pressurized vapor of the second working fluid to perform mechanical work, wherein the secondary working fluid comprises at least one compound having the formula (I) as defined above. Such binary power cycles are described in, for example US Patent 4,760,705 hereby incorporated by reference in its entirety.

A further embodiment of the invention comprises a process for converting thermal energy to mechanical energy comprising a Rankine cycle system and a secondary loop; wherein the secondary loop comprises a thermally stable sensible heat transfer fluid interposed between a heat source and the Rankine cycle system and in fluid communication with the Rankine cycle system and the heat source to transfer heat from the heat source to the Rankine cycle system without subjecting the organic Rankine cycle system working fluid to heat source temperatures; wherein the working fluid is at least one compound having and HFO/HCFO structure, as defined above.

This process is beneficial when it is desired to address higher source temperatures without subjecting a working fluid, such as those of the invention, directly to the high source temperatures. If direct heat exchange between the working fluid and the heat source is practiced, the design must include means to avoid thermal decomposition of the working fluid, particularly if there is an interruption of flow. To avoid the risk and extra expense for the more elaborate design, a more stable fluid, such as a thermal oil, can be used to access the high-temperature source. This provides a means to address the high source heat, manage design complexity/cost, and utilize a fluid with otherwise desirable properties.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention, it being understood that various changes may be made in the function and arrangement of elements described in an exemplary embodiment without departing from the scope of the invention as set forth in the appended claims and their legal equivalents.

The present methods, systems and compositions are also adaptable for use in connection other high temperature heat transfer systems such as, but not limited to medium and high temperature heat pump applications. Non-limiting examples of such systems include medium heat pump systems having a condensing temperature of greater than 60° C, and preferably from 70° C to 100° C. High temperature heat pump systems include those having condensing temperature greater than 100° C. Examples of such systems include, but are not limited to those used as replacements for boilers by the industry. Typical examples include water-to-water heat pumps for shopping centers. They can also be used in the oil or mining industry where heat source is readily available. The compressor is usually of centrifugal type, but other types like screw are also used. The heat exchangers can be direct expansion shell-tube type or flooded shell tube type.

In certain other preferred embodiments, the compositions of the present invention may be used in heat pump or refrigerant systems containing a lubricant such as polyolester oils, and the like, or may be used with other lubricants traditionally used with CFC or HCFC refrigerants, as discussed in greater detail above. As used herein, the term "heat pump system" refers generally to any system or apparatus, or any part or portion of such a system or apparatus, which consists of compressor, expansion device and heat exchangers. This system would provide heat through the condenser. The compressor can be of centrifugal, screw and positive displacement type whereas the heat exchangers can be of dry expansion or flooded type. Expansion valves can be electronic or thermostatic as needed by the specifics of the design. This description does not limit any possible variances coming from specific applications.

## Claims

1. An organic Rankine cycle system comprising:
(a) an hydrofluoroolefin (HFO) and/or hydrochlorofluoroolefin (HCFO) working fluid circulating in said system;
(b) a heat source for vaporing the working fluid;
(c) a cooling source for condensing said vaporized working fluid; and
(d) at least one oxygen-removing component for removing oxygen from said working fluid.

2. The system of claim 1, wherein the HFO and/or HCFO working fluid comprises a compound having the structure of formula (I): 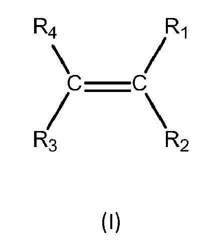 wherein R₁, R₂ R₃, and R₄ are each independently selected from the group consisting of H, F, Cl, Br, C₁-C₆ alkyl, C₁-C₆ fluoroalkyl C₆-C₁₅ aryl, C₆-C₁₅ fluoroaryl C₆-C₁₂ cycloalkyl, C₆-C₁₂ fluorocycloalkyl, C₆-C₁₅ alkylaryl, and C₆-C₁₅ fluoroalkylaryl, wherein the compound contains at least one F atom.

3. The system of claim 2 wherein the compound contains at least one F atom and at least one Cl atom.

4. The system of any one of claims 1 to 3 wherein the HFO working fluid is represented by the formula CₓF_{y}H_{z} wherein y+z = 2x, x is at least 3, y is at least 1, and z is 0 or a positive number.

5. The system of any one of claims 1 to 4 wherein the HCFO working fluid is represented by the formula CₓF_{y}H_{z}Clₙ wherein y+z+n = 2x, x is at least 3, y is at least 1, z is 0 or a positive number, and n is 1 or 2.

6. The system of any one of claims 1 to 5 wherein the HFO and/or HCFO working fluid is selected from the group consisting of HFO-1234ze(E), HFO-1234ze(Z), HCFO-1233zd(E), HCFO-1233zd(Z), HFO-1234yf, and combinations of two or more of these.

7. The system of any one of claims 1 to 6 wherein the at least one oxygen-removing component comprises an oxygen-removing adsorbent or sorbent that is capable of reacting with elemental oxygen to permanently remove it from the circulating working fluid.

8. The system of claim 7 wherein the oxygen-removing adsorbent or sorbent comprises an oxidizable metal, oxidizable metal salt, or oxidizable metal oxide, wherein the oxidizable metal is selected from the group consisting of copper, iron, nickel, manganese, molybdenum, cobalt, vanadium, chromium, zinc, and combinations of two or more thereof.

9. The system of claim 7, wherein the oxygen-removing adsorbent or sorbent comprises an organic antioxidant.

10. The system of claim 7, wherein the oxygen-removing adsorbent or sorbent comprises a liquid oxygen-removing material selected from the group consisting of alpha-methylstyrene, tocopherol, hydroquinone, isoprene, geraniol, myrcene, and combinations of two or more thereof.

11. A process for converting thermal energy to mechanical energy in a Rankine cycle comprising:
(a) vaporizing the working fluid of any one of claims 1 to 10 with a heating source to form a vaporized fluid;
(b) expanding the vaporized fluid and then cooling with a cooling source to condense the vapor to form a condensed working fluid; and
(c) pumping the condensed working fluid.
